# EUROPEAN PATENT SPECIFICATION

(11) **EP 3 434 036 B1**
(45) Date of publication and mention of the grant of the patent: **29.04.2020**
(21) Application number: 17708684.0
(22) Date of filing: 27.01.2017
(51) Int. Cl.: H04W 16/18, H04W 16/10

(54) **OPTIMIZED CELL PARAMETER CONFIGURATION BASED ON A RADIO ENVIRONMENT MAP**
OPTIMIERTE ZELLPARAMETERKONFIGURATION AUF DER BASIS EINER FUNKUMGEBUNGSKARTE
CONFIGURATION OPTIMISÉE DE PARAMÈTRES D'UNE CELLULE À PARTIR D'UNE CARTE D'ENVIRONNEMENT RADIO

(30) Priority: 24.03.2016 FR 1600499
(43) Date of publication of application: 30.01.2019
(73) Proprietor: RED TECHNOLOGIES SAS, 75015 Paris (FR)
(72) Inventor: MULLER, Pierre-Jean, 94100 Saint-Maur-des-Fosses (FR); LE THIERRY D'ENNEQUIN, Christophe, 75005 Paris (FR)
(86) International application number: PCT/EP2017/051863
(87) International publication number: WO 2017/162354

(56) References cited:
- CN-A- 104 320 799
- US-A1- 2015 319 611

## Description

### BRIEF DESCRIPTION OF THE DRAWINGS

Figure 1 shows the steps performed to automatically configure a parameter to a cell according to the present invention.
Figure 2 shows an example of Level 1-Radio Block.
Figure 3 shows an example of parameters associated with each class of cell.
Figure 4 shows an example of a cell radio propagation.

### DESCRIPTION OF THE INVENTION

Cell configuration is known in the art, Patent Application Publication US 2015/0319611 A1 for example proposes a method to allocate a physical cell identification, PCI, in an LTE radio network. The present invention relates to a method to configure a parameter used to operate a cell belonging to a network of cells, as captured in the appended claims.

The configuration of parameters according to the present invention can be performed at network initialization, to a set of existing cells, or upon switch on of a new cell.

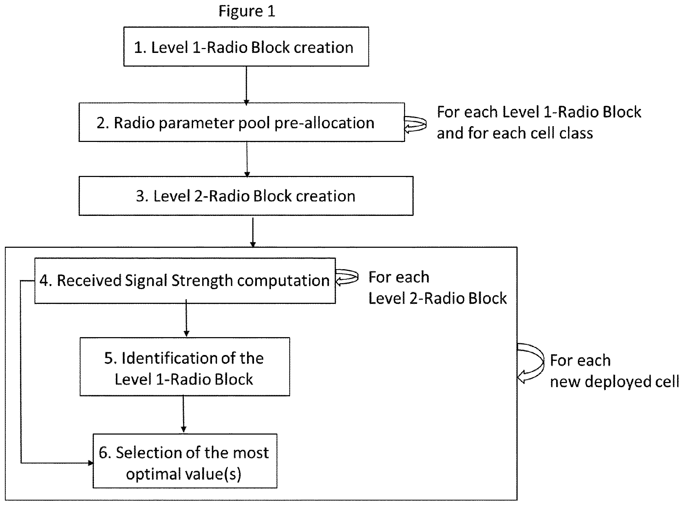

Figure 1 shows the steps performed in order to configure a parameter at a cell according to the present invention.

Such parameter could be, for example, the PCI or the RACH Root Sequence, or any parameter whose optimal value(s) at a given cell depends on the value(s) assigned to other cells surrounding this cell.

Steps 1 to 3 are performed once, before the deployment of any cell.

Steps 4 to 6 are performed for each new cell deployed.

The details of each step are further described below.

### Step 1: Level 1-Radio Block creation

The geographic area over which cells are deployed is split into a set of Level 1-Radio Blocks.

The size of a Level 1-Radio Block is based on the transmission power of the cells.

For example, a Level 1-Radio Block can be defined as a square whose sides are twice the distance covered by the typical transmission power of cells that constitute the overlay radio network coverage e.g. urban macro cells.

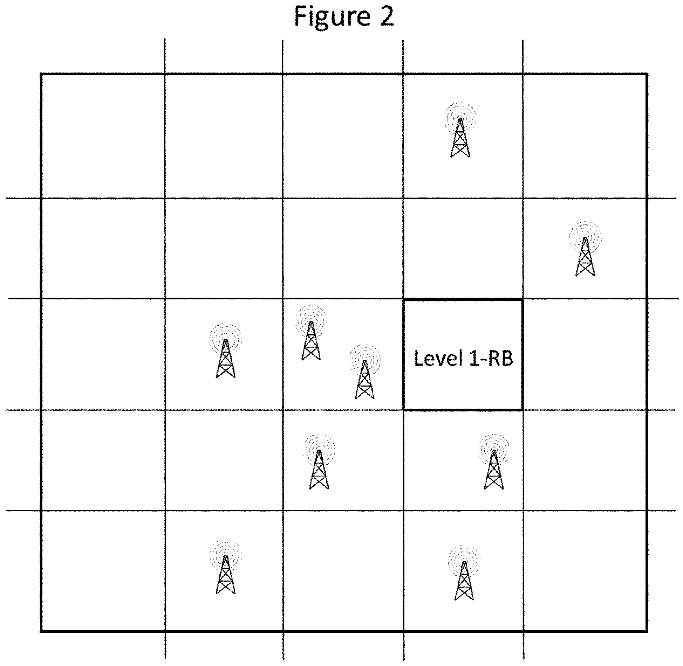

An example of Level 1-Radio Block is illustrated in figure 2. This figure shows a deployment of cells. The grey square labeled "Level 1-RB" is an example of Level 1-Radio Block.

### Step 2: Radio parameter pool pre-allocation

A pool is a set of values that is pre-allocated, within a given Level 1-Radio Block.

This set of values contains a subset of the values that can be assigned to the parameter to configure.

In case multiple classes of cells (i.e., different transmission power classes such as macro, micro, pico or femto cells) are deployed, a pool can be created for each class of cell.

The number of values pre-allocated within a pool associated with a given class of cells depends on the maximum number of cells of this class of cells that is expected to be deployed within the Level 1-Radio Block associated with this pool.

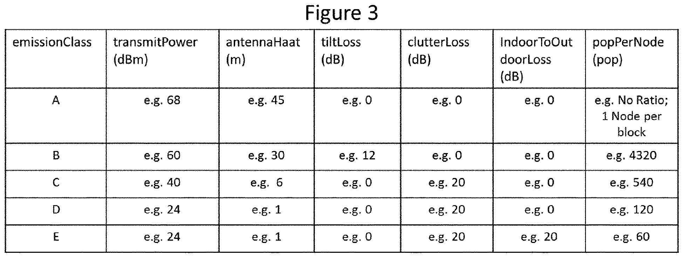

This estimation can be based, for example, on the population density per unit area. The table in figure 3 gives an example of cell classes. For each class, the value in the last column labeled "popPerNode" indicates the number of inhabitants per cell.

For example, according to this table, a Level 1-Radio Block over which the population is 4320 inhabitants will have a pool for Class B cells containing one element.

Similarly, a Level 1-RadioBlock over which the population is 600 inhabitants will have a pool for Class D cells containing 5 elements (this value is obtained by dividing 600 by the value 120 indicated in the table).

The values pre-allocated in a given pool are chosen so as to satisfy in an optimal manner the constraints on the parameter being configured.

For example, in case the parameter being configured is a PCI, and in order to minimize PCI collisions and PCI confusions, the values of a given pool associated with a given cell class are chosen so that those values are different from any of the followings values:
- the values already pre-allocated to a pool of the same Level-1 Radio Block associated with other cell classes,
- the values already pre-allocated to a pool of a neighbor Level-1 Radio Block associated with the same cell class,
- the values already pre-allocated to a pool of a neighbor Level-1 Radio Block associated with other cell classes.

### Step 3: Level 2-Radio Block creation

The geographic area over which cells are deployed is split into a set of Level 2-Radio Blocks.

The size of a Level 2-Radio Block is determined based on the granularity of the RSS (Received Signal Strength) computation performed in step 4. A typical granularity of a Level 2-Radio Block would be 10 x 10 meters.

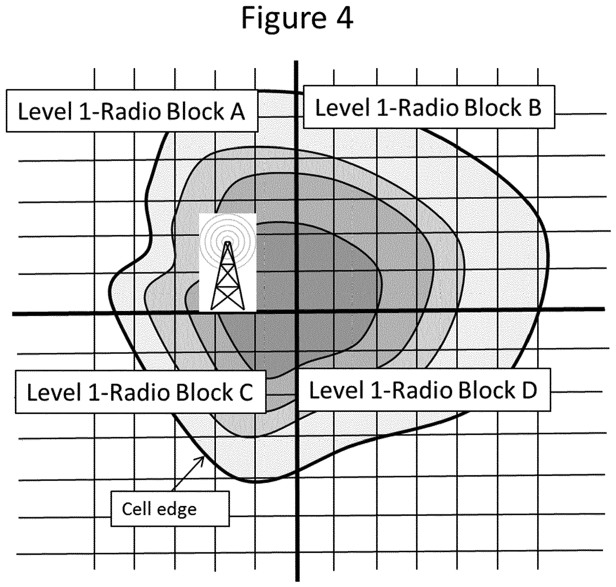

Figure 4 shows an example of Level 2-Radio Blocks. In this figure, each small square is a Level 2-Radio Block.

### Step 4: Received Signal Strength computation

For each new cell deployed and at each Level 2-Radio Block, the estimated Received Signal Strength (RSS) is computed.

This computation can be performed using a point to point radio propagation algorithm and may take into account environment parameters.

The result of this computation is stored as a radio environment map.

### Step 5: Identification of the Level 1-Radio Block

The Level 1 -Radio Block associated with each cell is determined using the radio environment map computed in step 4.

The Level 1-Radio Block of a cell can be identified, for example, by counting, in each Level 1-Radio Block, the number of Level 2-Radio Blocks over which the estimated RSS value for this cell is above a pre-defined threshold e.g. corresponding to the cell edge.

Alternatively, a weight can be assigned to each Level 2-Radio Block, according to the estimated RSS value.

The Level 1-Radio Block with the highest number of counted Level 2-Radio Block is then assigned to the cell. For example, in figure 4, the Level 1-Radio block B is assigned to the cell shown in this figure.

### Step 6: Selection of the most optimal value(s) within the pool

For each cell, a value is chosen, among the set of values available in the pool associated with the class and the Level 1-Radio Block of this cell. This value is then removed from the pool, so that it is not allocated to another cell.

The value is chosen, whenever possible, so as to satisfy the constraints on the parameters being configured.

For example, in the case of the PCI, the values are chosen so that collisions and confusions are avoided. The radio environment map computed during step 4 can be used to identify the potential collisions and confusions with those cells.

The precise algorithm to select a value, among the set of values available within a pool, is outside of the scope of this invention.

## Claims

1. A method to configure a parameter used to operate a cell belonging to a network of cells, using a radio environment map, composed of following operations:
i. before a configuration of any cell, performing following steps,:
a. splitting a geographic area over which said network of cells is deployed into a set of Level 1-Radio Blocks,
b. pre-allocating, to each Level 1-Radio Block, a pool of values containing a subset of values that can be assigned to said parameter,
c. splitting the geographic area over which said network of cells is deployed into a set of Level 2-Radio Blocks.
ii. for each new cell deployed, performing the following steps:
a. computing, at each Level 2-Radio Block, an estimated Received Signal Strength of said cell, and storing the result in a radio environment map,
b. identifying, using the radio environment map, the Level 1-Radio Block associated with said cell, based on a number of Level 2-Radio Blocks over which the estimated Received Signal Strength of said cell is beyond a pre-defined threshold,
c. selecting a value, from the pool of values pre-allocated to the Level 1-Radio Block identified in step ii.b, and removing this value from the pool.

2. The method according to claim 1 wherein the number of values in a given pool depends on a maximum number of cells that is expected to be deployed within the Level 1-Radio Block associated with this pool.

3. The method according to any one of claims 1 to 2 wherein multiple pools of values are pre-allocated to each Level 1-Radio Block, each pool being associated to a class of cell.

4. The method according to any one of claims 1 to 3 wherein the values in a given pool are chosen so that those values are different from any of following values:
i. the values already pre-allocated to a pool of the same Level-1 Radio Block as this pool and associated with other cell classes,
ii. the values already pre-allocated to a pool of a neighbor Level-1 Radio Block of the Level-1 Radio Block of this pool and associated with a same cell class,
iii. the values already pre-allocated to a pool of a neighbor Level-1 Radio Block of the Level-1 Radio Block of this pool and associated with other cell classes.

5. The method according to any one of claims 1 to 4 wherein computation of the estimated Received Signal Strength is performed using a point to point radio propagation algorithm, and wherein the Level 1-Radio Block associated with the cell is identified by counting, in each Level 1-Radio Block, the number of Level 2-Radio Blocks over which the estimated Received Signal Strength value for this cell is above a pre-defined threshold.

6. The method according to claim 5 wherein a weighting is applied to each Level 2-Radio Block according to the estimated Received Signal Strength value computed for this cell at this Level 2-Radio Block.

7. The method according to any one of claims 1 to 6 wherein the parameter configured is a Physical Cell Identifier.

8. The method according to any one of claims 1 to 7 wherein the parameter configured is composed of one or multiple RACH Root Sequences.

## Patentansprüche

1. Verfahren zum Konfigurieren eines Parameters, der zum Betreiben einer Zelle verwendet wird, die zu einem Netzwerk von Zellen gehört, unter Verwendung einer Funkumgebungskarte, wobei das Verfahren aus folgenden Abläufen besteht:
i. Durchführen der folgenden Schritte vor dem Konfigurieren einer Zelle:
a. Aufteilen eines geografischen Bereichs, über den das Netzwerk von Zellen eingesetzt wird, in eine Menge von Stufe-1-Funkblocks ("Level 1-Radio Blocks"),
b. Vorab-Zuweisen einer Gruppe von Werten, die eine Untermenge der Werte enthält, die dem Parameter zugeordnet werden können, zu jedem Stufe-1-Funkblock,
c. Aufteilen des geografischen Bereichs, über den das Netzwerk von Zellen eingesetzt wird, in eine Menge von Stufe-2-Funkblocks ("Level 2-Radio Blocks).
ii. Durchführen der folgenden Schritte für jede neue eingesetzte Zelle:
a. Berechnen des Werts der geschätzten Empfangssignalstärke der Zelle für jeden Stufe-2-Funkblock und Speichern dieses Werts in einer Funkumgebungskarte,
b. Identifizieren des der Zelle zugeordneten Stufe-1-Funkblocks unter Verwendung der Funkumgebungskarte basierend auf einer Anzahl von Stufe-2-Funkblocks, für die der Wert der geschätzten Empfangssignalstärke der Zelle über einer vordefinierten Schwelle liegt,
c. Auswählen eines Werts aus der Gruppe von Werten, die dem in Schritt ii.b identifizierten Stufe-1-Funkblock vorab zugwiesen wurden, und Entfernen dieses Werts aus der Gruppe.

2. Verfahren nach Anspruch 1, **dadurch gekennzeichnet, dass** eine Anzahl von Werten in einer gegebenen Gruppe von der geschätzten maximalen Anzahl von Zellen abhängt, von denen erwartet wird, dass sie in dem Stufe-1-Funkblock eingesetzt werden, der dieser Gruppe zugeordnet ist.

3. Verfahren nach einem der Ansprüche 1 bis 2, **dadurch gekennzeichnet, dass** mehrere Gruppen von Werten jedem Stufe-1-Funkblock vorab zugwiesen werden, wobei jede Gruppe einer Zellklasse zugeordnet ist.

4. Verfahren nach einem der Ansprüche 1 bis 3, **dadurch gekennzeichnet, dass** die Werte in einer gegebenen Gruppe so gewählt werden, dass sich diese Werte von allen nachfolgend angegebenen Werten unterscheiden:
i. von Werten, die bereits vorab einer Gruppe desselben Stufe-1-Funkblocks zugewiesen wurden, der einer anderen Zellklasse zugeordnet ist,
ii. von Werten, die bereits vorab einer Gruppe eines benachbarten Stufe-1-Funkblocks zugwiesen wurden, der derselben Zellklasse zugeordnet ist,
iii. von Werten, die bereits vorab einer Gruppe eines benachbarten Stufe-1-Funkblock zugwiesen wurden, der einer anderen Zellklasse zugeordnet ist.

5. Verfahren nach einem der Ansprüche 1 bis 4, **dadurch gekennzeichnet, dass** das Berechnen der geschätzten Empfangssignalstärke unter Verwendung eines Punkt-zu-Punkt-Funkausbreitungsalgorithmus durchgeführt wird, und wobei der dieser Zelle zugeordneten Stufe-1-Funkblock durch Zählen in jedem Stufe-1-Funkblock der Anzahl der Stufe-2-Funkblocks identifiziert wird, bei denen der Wert der geschätzten Empfangssignalstärke für diese Zelle über einer vordefinierten Schwelle liegt.

6. Verfahren nach Anspruch 5, **dadurch gekennzeichnet, dass** für jeden Stufe-2-Funkblock eine Gewichtung gemäß dem Wert der geschätzten Empfangssignalstärke durchgeführt wird, der für diese Zelle an diesem Stufe-2-Funkblock berechnet wird.

7. Verfahren nach einem der Ansprüche 1 bis 6, **dadurch gekennzeichnet, dass** der konfigurierte Parameter eine physische Zellkennung ("Physical Cell Identifier"), PCI, ist.

8. Verfahren nach einem der Ansprüche 1 bis 7, **dadurch gekennzeichnet, dass** der konfigurierte Parameter aus einer oder mehreren RACH Root-Sequenzen ("RACH Root Sequences"), RSS, besteht.

## Revendications

1. Une méthode pour configurer un paramètre utilisé pour faire fonctionner une cellule appartenant à un réseau de cellules, à l'aide d'une carte d'environnement radio, composée des opérations suivantes :
i. avant le déploiement d'une cellule, réalisation des étapes suivantes :
a. découpage d'une zone géographique sur laquelle ledit réseau de cellules est déployé en un ensemble de Blocs Radio de Niveau 1,
b. pré-allocation, pour chaque Bloc Radio de Niveau 1, d'un groupe de valeurs contenant un sous-ensemble des valeurs pouvant être assignées audit paramètre,
c. découpage de la zone géographique sur laquelle ledit réseau de cellules est déployé en un ensemble de Blocs Radio de Niveau 2.
ii. pour chaque nouvelle cellule déployée, réalisation des étapes suivantes :
a. calcul, pour chaque Bloc Radio de Niveau 2, de la valeur de la puissance de signal reçu estimée pour ladite cellule, et enregistrement de cette valeur dans une carte de l'environnement radio,
b. identification, à l'aide de la carte de l'environnement radio, du Bloc Radio de Niveau 1 associé à ladite cellule, à partir d'un nombre de Blocs Radio de Niveau 2 pour lesquels la valeur estimée de puissance de signal reçu pour ladite cellule est au-delà d'un seuil prédéfini,
c. sélection d'une valeur, au sein du groupe valeurs pré-allouées au Bloc Radio de Niveau 1 identifié à l'étape ii.b, et suppression de cette valeur du groupe.

2. La méthode selon la revendication 1 **caractérisée en ce que** un nombre de valeurs dans un groupe donné dépend du nombre maximum estimé de cellules que l'on s'attend à déployer au sein du Bloc Radio de Niveau 1 associé à ce groupe.

3. La méthode selon l'une au moins des revendications 1 à 2 **caractérisée en ce que** plusieurs groupes de valeurs sont pré-alloués à chaque Radio Bloc de Niveau 1, chaque groupe étant associé à une classe de cellule.

4. La méthode, selon l'une au moins des revendications 1 à 3 **caractérisée en ce que** les valeurs dans un groupe donné sont choisies de sorte que ces valeurs sont différentes de chacune des valeurs suivantes :
i. les valeurs déjà pré-allouées à un groupe du même Bloc Radio de Niveau 1 associé à une autre classe de cellules,
ii. les valeurs déjà pré-allouées à un groupe d'un Bloc Radio de Niveau 1 voisin associé à la même classe de cellules,
iii. les valeurs déjà pré-allouées à un groupe d'un Bloc Radio de Niveau 1 voisin associé à une autre classe de cellules.

5. La méthode selon l'une au moins des revendications 1 à 4 **caractérisée en ce que** le calcul de la puissance de signal reçu estimée est réalisé à l'aide d'un algorithme de propagation radio point à point, et **en ce que** le Bloc Radio de Niveau 1 associé à la cellule est identifié en comptant, dans chaque Bloc Radio de Niveau 1, le nombre de Blocs Radio de Niveau 2 pour lesquels la valeur estimée de puissance de signal reçu pour cette cellule est au-delà d'un seuil prédéfini.

6. La méthode selon la revendication 5 **caractérisée en ce qu'**une pondération est appliquée à chaque Bloc Radio de Niveau 2 en fonction de la puissance de signal reçu estimée calculée pour cette cellule en ce Bloc Radio de Niveau 2.

7. La méthode, selon l'une au moins des revendications 1 à 6 **caractérisée en ce que** le paramètre configuré est un PCI (ou « Physical Cell Identifier »).

8. La méthode, selon l'une au moins des revendications 1 à 7 **caractérisée en ce que** le paramètre configuré est composé d'une ou plusieurs valeurs de RRS (ou « RACH Root Sequences »).
